# EUROPEAN PATENT APPLICATION

(11) **EP 4 806 578 A1**
(43) Date of publication of application: **16.09.2026**
(21) Application number: 25752035.3
(22) Date of filing: 28.01.2025
(51) Int. Cl.: B23K 31/00, B23K 9/00, B23K 9/02, B23K 9/04, F03D 13/25

(54) **TURNING MULTI-LAYER WELDING METHOD AND TURNING MULTI-LAYER WELDED JOINT**

(30) Priority: 08.02.2024 JP 2024017692
(71) Applicant: JFE Steel Corporation, Tokyo 100-0011 (JP)
(72) Inventor: TAKAKI, Yoshifumi, Tokyo 100-0011 (JP); SAKIMOTO, Takahiro, Tokyo 100-0011 (JP); UEDA, Keiji, Tokyo 100-0011 (JP)
(74) Representative: Haseltine Lake Kempner LLP
(86) International application number: PCT/JP2025/002497
(87) International publication number: WO 2025/169781

(57) **Abstract**

Provided a multi-layer welding method and a multi-layer welded joint in a large structure such as a floating offshore wind power generation facility. The present invention is a multi-layer welding method in which a bracket 6 for reinforcing a vertical plate 5 provided on a steel plate 4 is welded to the steel plate 4 and the vertical plate 5, the welding method including: forming a first weld bead 1 in multiple layers along a short side of a rectangular contact surface 6a at which the bracket 6 is in contact with the steel plate 4; and subsequently forming a second weld bead 2 and a third weld bead 3 in multiple layers such that the second weld bead 2 and the third weld bead 3 are provided along long sides of the rectangular contact surface 6a, overlap end portions of the first weld bead 1, and further extend onto the steel plate 4.

## Description

### Technical Field

The present invention relates to a multi-layer welding method and a multi-layer welded joint. The present invention particularly relates to a multi-layer welding method and a multi-layer welded joint including a bracket and being capable of improving the fatigue strength of a weld, between a steel plate and the bracket of a steel structure, at which stress concentration is high by elongating a weld bead.

### Background Art

In recent years, in the field of offshore wind power generation, floating offshore wind power generation has been studied because of ease of installation even in a sea area with a water depth of 50 m or more. A floating offshore wind power generation facility includes a bracket so as to ensure strength as a steel structure. However, since the steel structure is exposed to external forces such as wind and waves, there is a problem in that the fatigue strength of a weld toe of a welded joint portion of the bracket decreases. Thus, various techniques for improving the fatigue strength of the weld toe in the welded joint portion of a large structure such as the floating offshore wind power generation facility have been studied.

For example, Patent Literature 1 discloses a peripheral welded joint of a gusset. The welded joint includes a first weld bead elongated on a main plate along a short side of the gusset from both sides of the short side, and second and third weld beads, along respective long sides of the gusset, overlapping the first weld bead and elongating on the main plate. It is stated that, according to this welded joint, the fatigue strength can be improved by elongating the weld beads.

The method described in Patent Literature 1 is effective in improving the fatigue strength of a joint welded in a single layer. However, when a member such as a bracket in a floating offshore wind power generation facility becomes thicker, multi-layer welding is required, but Patent Literature 1 does not clarify whether the method is effective in improving the fatigue strength of the welded joint in such a case.

### Citation List

### Patent Literature

Patent Literature 1: Japanese Unexamined Patent Application Publication No. 2018-158380

### Summary of Invention

### Technical Problem

In the above-described multi-layer welded joint, due to the shape of the weld toe, stress concentration at the weld toe becomes higher than that of a single-layer single-pass welded joint; thus, a problem arises in that the fatigue strength of the multi-layer welded joint becomes lower than that of the single-layer single-pass welded joint.

The present invention has been made to solve the problem of the related art, and an object of the present invention is to provide a multi-layer welding method and a multi-layer welded joint capable of improving the fatigue strength of a welded joint portion without reducing the fatigue strength even when welding of a bracket portion is performed in multiple layers in a large structure such as a floating offshore wind power generation facility.

### Solution to Problem

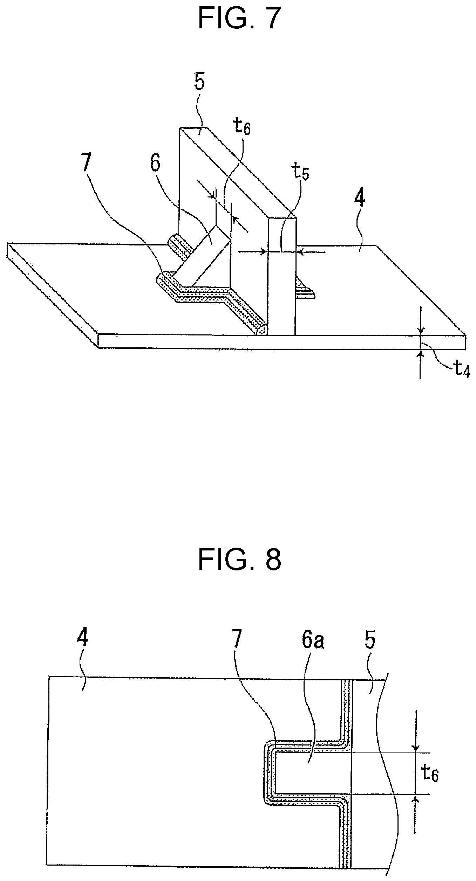

Here, an existing example of, in a steel structure including a bracket, a multi-layer welded joint of a bracket portion is illustrated in Figs. 7 and 8. Fig. 8 illustrates the welded joint in Fig. 7 from above. As illustrated in the external view of the welded joint in Fig. 7, the existing example has a shape in which a vertical plate 5 on a steel plate 4 is sandwiched by brackets 6 disposed on both sides of the vertical plate 5, and includes, at a joint portion thereof, a weld bead 7 formed by multi-layer welding. In the welding method, as illustrated in a one-side plan view of the welded joint in Fig. 8, the multi-layer weld bead 7 is formed by performing multi-layer welding from a joint portion between the steel plate 4 and the vertical plate 5, around a rectangular contact surface 6a of the bracket 6 from the region of one long side thereof via the region of a short side thereof to the region of the other long side thereof, and then to a joint portion between the steel plate 4 and the vertical plate 5 in a continuous manner.

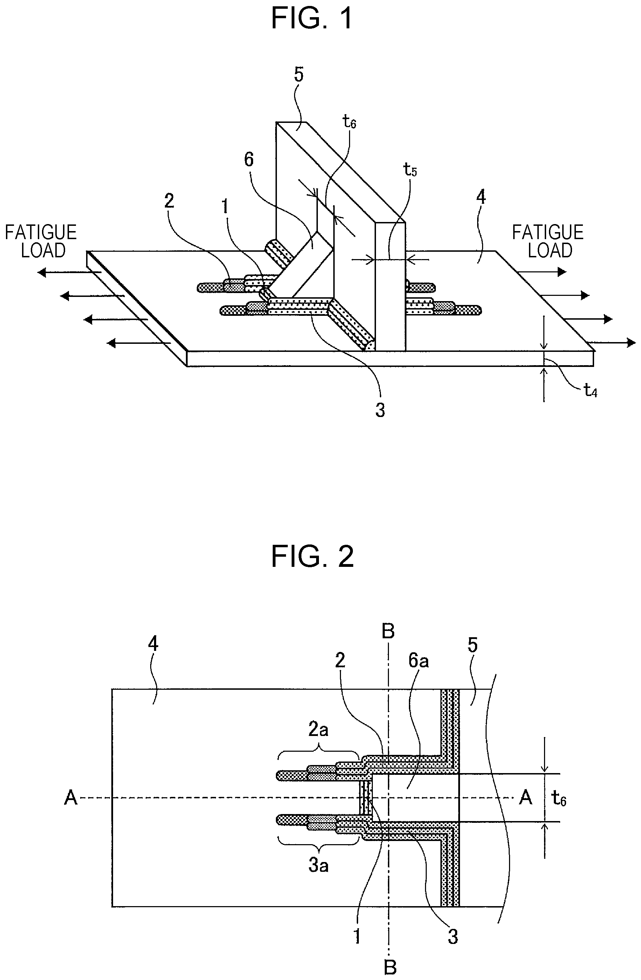

The present inventors have conducted various studies. As a result, the inventors have found that, in a multi-layer welded joint including a bracket, the fatigue strength can be improved by causing a multi-layer weld bead beside the long side of the rectangular contact surface 6a to extend onto the steel plate, beyond the weld bead beside the short side of the rectangular contact surface 6a, as illustrated in Fig. 2 described later, rather than simply performing only multi-layer welding. Further, based on this finding, the inventors conducted studies on an optimal multi-layer welding method.

The studies were conducted on a steel structure including a bracket. There were produced a welded joint in which peripheral welding was simply performed with a multi-layer weld bead along the periphery of a bracket as illustrated in the example of Fig. 7 and the like, and a welded joint, as illustrated in the example of Fig. 1 and the like described later, in which a multi-layer weld bead was formed along the periphery of a bracket and was further elongated on a steel plate, and the length of such an elongated portion of each layer was adjusted. Then, a fatigue test was conducted using these welded joints. By comparing the fatigue test results thereof, the effect of improving the fatigue strength in the welded joint including the elongated multi-layer weld bead was verified. As a result, it was found that the fatigue strength of the welded joint was improved by causing the multi-layer weld bead of the bracket of the steel structure to extend onto the steel plate. It was also found that the fatigue strength of the welded joint was stably improved by appropriately adjusting the length of the elongated portion of each layer of the multi-layer weld bead.

The present invention has been completed based on the findings and through further studies, and the gist of the present invention is as follows.
[1] A multi-layer welding method
   in which a vertical plate is provided on a steel plate, and a bracket for reinforcing the vertical plate is welded to the steel plate and the vertical plate, the multi-layer welding method including:
   forming a first weld bead in multiple layers along a short side of a rectangular contact surface at which the bracket is in contact with the steel plate; and subsequently forming a second weld bead and a third weld bead in multiple layers such that the second weld bead and the third weld bead are provided along long sides of the rectangular contact surface, overlap end portions of the first weld bead, and extend onto the steel plate.
[2] The multi-layer welding method according to the item [1], in which an elongated portion length (N_{F}) of a final layer in an elongated portion of each of the second weld bead and the third weld bead is set in a range of 5 mm to 50 mm.
[3] The multi-layer welding method according to the item [1] or [2], in which, when each layer in an elongated portion of each of the second weld bead and the third weld bead is denoted by an i-th layer and an elongated portion length of each of the layers is denoted by Nᵢ, and when a preceding layer of each of the layers is denoted by an (i-1)-th layer and an elongated portion length of the preceding layer of each of the layers is denoted by Nᵢ₋₁, a difference ΔN represented by ΔN = Nᵢ₋₁ - Nᵢ is in a range of 5 mm to 50 mm, and i is a natural number from 2 to 10.
[4] The multi-layer welding method according to any one of the items [1] to [3], in which the steel plate is a floating member of a floating offshore wind power generation facility, and the vertical plate is a tower member of the floating offshore wind power generation facility.
[5] A multi-layer welded joint in which brackets disposed so as to sandwich a vertical plate provided on a steel plate are welded to the steel plate and the vertical plate, the welded joint including:
   a first weld bead formed in multiple layers along a short side of a rectangular contact surface at which a corresponding one of the brackets is in contact with the steel plate; and
   a second weld bead and a third weld bead formed in multiple layers so as to be provided along long sides of the rectangular contact surface, overlap end portions of the first weld bead 1, and extend onto the steel plate 4.
[6] The multi-layer welded joint according to the item [5], in which an elongated portion length (N_{F}) of a final layer in an elongated portion of each of the second weld bead and the third weld bead is set in a range of 5 mm to 50 mm.
[7] The multi-layer welded joint according to the item [5] or [6], in which, when each layer in an elongated portion of each of the second weld bead and the third weld bead is denoted by an i-th layer and an elongated portion length of each of the layers is denoted by Nᵢ, and when a preceding layer of each of the layers is denoted by an (i-1)-th layer and an elongated portion length of the preceding layer of each of the layers is denoted by Nᵢ₋₁, a difference ΔN represented by ΔN = Nᵢ₋₁ - Nᵢ is in a range of 5 mm to 50 mm, and i is a natural number from 2 to 10.
[8] The multi-layer welded joint according to any one of the items [5] to [7], in which the steel plate is a floating member of a floating offshore wind power generation facility, and the vertical plate is a tower member of the floating offshore wind power generation facility. Advantageous Effects of Invention

According to the present invention, there can be provided the welding method and the welded joint capable of improving fatigue strength by elongating the multi-layer weld beads of the bracket of a steel structure as compared with a multi-layer welded joint including no elongated portion, and a significant industrial effect can be exhibited.

### Brief Description of Drawings

[Fig. 1] Fig. 1 is a perspective view schematically illustrating the appearance of an example of a welded joint obtained by a multi-layer welding method according to the present invention.
[Fig. 2] Fig. 2 is a plan view schematically illustrating a one-side shape of the example of the welded joint obtained by the multi-layer welding method according to the present invention.
[Fig. 3] Fig. 3 is a schematic view illustrating a sectional shape of a first weld bead in the example of the welded joint obtained by the multi-layer welding method according to the present invention.
[Fig. 4] Fig. 4 is a schematic view illustrating sectional shapes of second and third weld beads in the example of the welded joint obtained by the multi-layer welding method according to the present invention.
[Fig. 5] Fig. 5 is a plan view schematically illustrating a measuring method of the length of each layer of elongated portions of the weld beads in the welded joint of the present invention.
[Fig. 6] Fig. 6 is a plan view schematically illustrating an example of the procedure of the multi-layer welding method according to the present invention.
[Fig. 7] Fig. 7 is a perspective view schematically illustrating the appearance of an example of an existing welded joint obtained by a multi-layer welding method without elongated portions.
[Fig. 8] Fig. 8 is a plan view schematically illustrating a one-side shape of the example of the existing welded joint obtained by the multi-layer welding method without elongated portions.

### Description of Embodiments

The present invention is directed to, in peripheral welding of a steel structure including a vertical plate and a bracket on a steel plate, a welded joint including a multi-layer weld bead. The present invention is directed to a welding method capable of improving the fatigue strength of the multi-layer welded joint by causing multi-layer weld beads beside long sides of a rectangular contact surface, at which the bracket of the multi-layer welded joint is in contact with the steel plate, to elongate beyond the region of a short side of the rectangular contact surface, and further setting the length of each layer to satisfy a predetermined condition. Hereinafter, embodiments of the present invention will be described, including examples, with reference to the drawings.

### [Peripheral Welded Joint of Steel Structure Including Steel Plate, Vertical Plate, and Bracket]

First, a welded joint obtained by a multi-layer welding method according to the present invention will be described. An external perspective view of an example of the welded joint is illustrated in Fig. 1. In this multi-layer welded joint, a vertical plate 5 having a rectangular parallelepiped shape is placed on a steel plate 4, and the vertical plate 5 is sandwiched from both sides by two brackets 6. The brackets 6 are provided for reinforcing the vertical plate 5. In addition, at the joints thereof, for example, multi-layer fillet welding is performed by gas-shielded arc welding, thereby forming first to third weld beads 1 to 3.

Examples of multi-layer welding include welding of 3 layers and 6 passes. In this case, the first layer is formed in 1 pass, the second layer is formed in 2 passes, and the third layer is formed in 3 passes (refer to Fig. 1 and the like). Other examples include welding of 6 layers and 21 passes. The number of layers and the number of passes are not particularly limited but are preferably determined as appropriate depending on the shape, dimensions, and the like of a structural member to be processed.

In the present invention, a structure made of steel plate is to be processed, and the plate thickness (t₄) of the steel plate 4 is preferably 25 mm to 50 mm (refer to Fig. 1). Other shape-related specifications are not particularly limited. Examples of the material of the steel plate 4 include a YP460 material and a YP355 material.

The vertical plate 5 is a rectangular parallelepiped. The plate thickness (t₅) of the vertical plate 5 is preferably 25 mm to 50 mm (refer to Fig. 1). Other shape-related specifications are not particularly limited. The material of the vertical plate 5 is also preferably the same kind of material as that of the steel plate 4.

The bracket 6 is a triangular prism having a right triangular bottom surface, and two side surfaces forming the right angle of the triangular prism are in contact with the steel plate 4 and the vertical plate 5 (refer to Fig. 1). Fig. 2 is a schematic view of a one-side shape of the welded joint and illustrates a rectangular contact surface 6a of the bracket in contact with the steel plate 4 and the vertical plate 5, and the first weld bead 1, the second weld bead 2, and the third weld bead 3, which will be described later. Regarding the shape of the bracket 6 in the welded joint, the plate thickness (t₆), that is, the length of a short side of the rectangular contact surface 6a, is preferably 25 mm to 50 mm (refer to Figs. 1 and 2). In addition, the material of the bracket 6 is also preferably the same kind of material as those of the steel plate 4 and the vertical plate 5. Note that, in practice, the shape-related specifications of a steel structure (actual structure) may be appropriately selected.

### [Weld bead]

The multi-layer weld beads formed mainly by fillet welding are constituted by the first weld bead 1, the second weld bead 2, and the third weld bead 3, each being a multi-layer weld bead, in accordance with the order of formation defined by the procedure of the welding method, which will be described later. The outline of the shapes of the multi-layer weld beads is illustrated in Figs. 1 and 2. Fig. 2 is a plan view of one side of the steel plate in the appearance of the welded joint portion in Fig. 1, and illustrates the bracket 6 as the rectangular contact surface 6a in contact with the steel plate 4. In the shape of the weld bead in the fillet welding of such a T-type joint, the leg length (width of the weld) is, for example, in the range of 18 mm to 35 mm. In the example of Fig. 2, in the width (leg length) of the weld of the third layer serving as a final layer, the total width is a value calculated by the following formula: "width (here, a value in the range of 18 mm to 35 mm) × 3 (passes)". As an example of the shape of the vertical plate 5 in this case, the long side (plate width) of the bottom surface is 100 mm to 200 mm, and the height (plate length) is 250 mm to 400 mm. In addition, as an example of the shape of the bracket 6, the length of the long side of the rectangular contact surface 6a is 200 mm to 400 mm.

### [First Weld bead 1]

The first weld bead 1 is a weld bead formed in the region of the short side on one side of the rectangular contact surface 6a (that is, the short side on the side not in contact with the vertical plate 5). The first weld bead 1 is formed along the short side. Here, the first weld bead 1 refers to a weld bead of plural multi-layers in a collective manner, and the "plural multi-layers" are preferably in the range of 2 to 10 layers, more preferably in the range of 2 to 6 layers. In addition, the first layer is preferably welded in 1 pass. The second and subsequent layers each include multiple passes, and the number of passes here is preferably in the range of 2 to 30, more preferably in the range of 2 to 21.

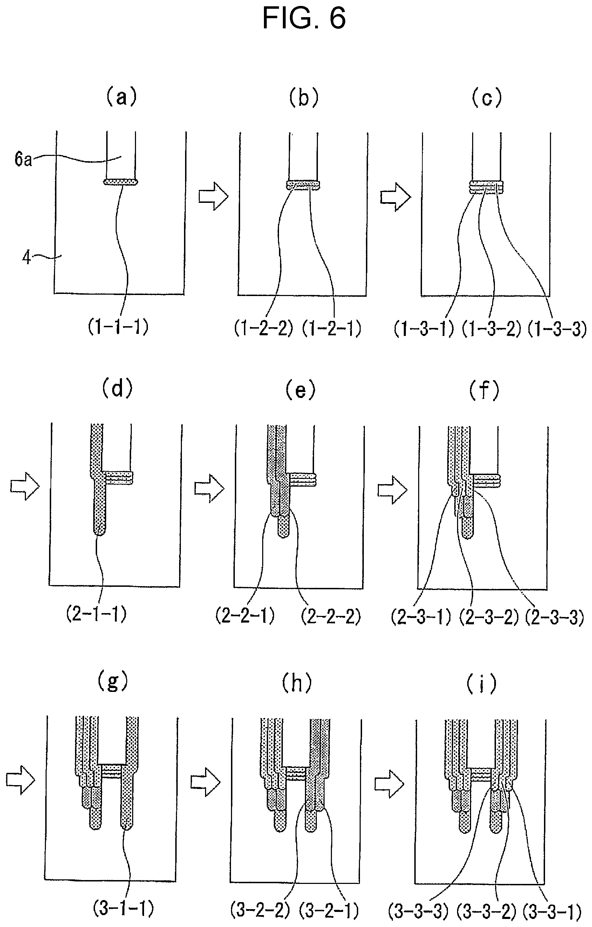

Note that the first weld bead 1 is formed linearly as illustrated in Fig. 1, (a) to (c) in Fig. 6, and the like. The length of the first weld bead 1 may be at least the same as the length of the short side of the rectangular contact surface 6a.

A weld toe of the first weld bead 1 formed beside the short side is a portion at which the most localized stress concentration occurs and a fatigue crack is likely to occur. Further, as described later, in the case of a floating offshore wind power generation facility to which the welding method of the present invention is applicable, structural stress concentration of the wind power generation facility occurs in addition to the localized stress concentration, resulting in increased occurrence of fatigue cracks.

In order to suppress such occurrence of fatigue cracks, it is important to elongate the second weld bead 2 and the third weld bead 3, which will be described below, on the steel plate 4.

### [Second Weld bead 2 and Third Weld bead 3]

The second weld bead 2 is a weld bead formed along one long side of the rectangular contact surface 6a of the bracket 6, overlapping a part of a start end portion (or a terminal end portion) of the first weld bead 1, and further elongating on the steel plate 4. In addition, the third weld bead 3 is a weld bead formed along the other long side of the rectangular contact surface 6a, overlapping a part of the terminal end portion (or the start end portion) of the first weld bead 1, and further elongating on the steel plate 4. Here, the second weld bead 2 and the third weld bead 3 each refer to a multi-layer bead formed by multiple welds, in a collective manner. In addition, the number of layers and the number of passes of the multi-layers are preferably the same as those of the above-described first weld bead 1.

Note that the second weld bead 2 and the third weld bead 3 are each formed into a stepped linear shape as illustrated in Fig. 1, (d) to (i) in Fig. 6, and the like.

In Fig. 2, the second weld bead 2 and the third weld bead 3 are vertically symmetrical. In the arrangement positions thereof, the second weld bead 2 is disposed on the upper side of the rectangular contact surface 6a, and the third weld bead 3 is disposed on the lower side, but the arrangement may be reversed.

In order to improve the fatigue strength in the case of the multi-layer welded joint, it is important to appropriately adjust the length of each layer in an elongated portion 2a of the second weld bead 2 and an elongated portion 3a of the third weld bead 3 each having a multi-layer elongated portion shape.

### [Multi-Layer Shape of Weld bead]

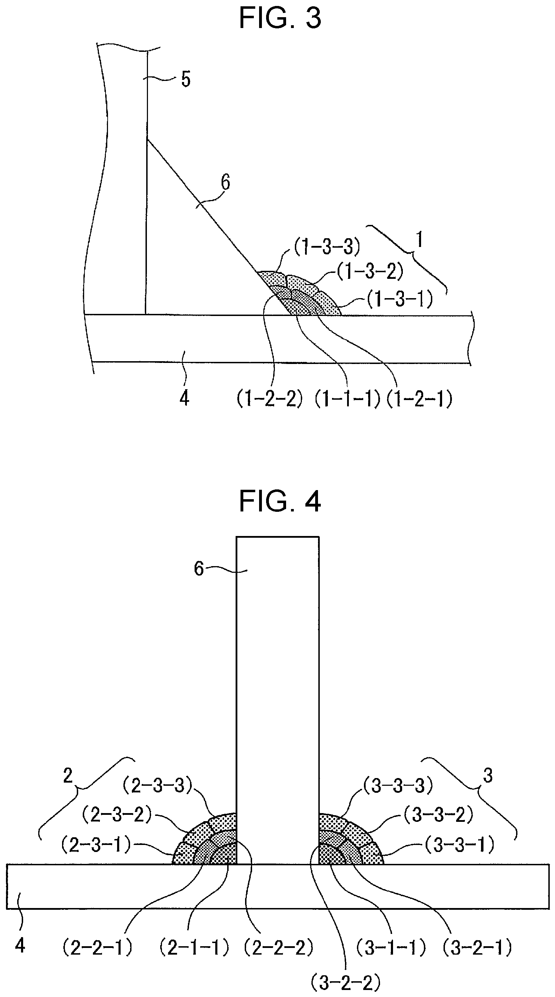

Subsequently, the multi-layer shape of the weld bead will be described based on Figs. 3 and 4, which illustrate a weld bead shape formed with 3 layers and 6 passes, as an embodiment of the multi-layer welded joint.

Fig. 3 illustrates a sectional structure of the first weld bead 1 formed with 3 layers and 6 passes, in a section parallel to the long side of the rectangular contact surface 6a of the bracket 6 and orthogonal to the short side thereof. In addition, Fig. 4 illustrates sectional structures of the second weld bead 2 and the third weld bead 3 each formed with 3 layers and 6 passes, in a section parallel to the short side of the rectangular contact surface 6a of the bracket 6 and orthogonal to the long side thereof. That is, Fig. 3 is a sectional view taken along line A-A illustrated in Fig. 2, and Fig. 4 is a sectional view taken along line B-B illustrated in Fig. 2.

As illustrated in Fig. 3, the number of passes of the first layer of the first weld bead 1 is 1 pass. The first layer (corresponding to 1-1-1 in the figure; hereinafter, the bead, layer, and pass in the figure are denoted by "bead-layer-pass") is formed on the steel plate 4 along the short side on one side of the rectangular contact surface 6a of the bracket 6 (that is, the short side on the side not in contact with the vertical plate 5).

Next, the number of passes of the second layer of the first weld bead 1 is 2 passes. In the second layer, the first pass (1-2-1) is formed on the steel plate 4 along the above-described first layer (1-1-1), and the second pass (1-2-2) is formed between the bracket 6 and the second-layer first pass (1-2-1).

The number of passes of the third layer of the first weld bead 1 is 3 passes. In the third layer, the first pass (1-3-1) is formed on the steel plate 4 along the second-layer first pass (1-2-1), and the subsequent second pass (1-3-2) is formed along the preceding third-layer first pass (1-3-1). The final third pass (1-3-3) is formed between the bracket 6 and the third-layer second pass (1-3-2).

Subsequently, as illustrated in Fig. 4, the number of passes of the first layer of the second weld bead 2 is 1 pass. The first layer of the second weld bead 2 (corresponding to 2-1-1 in the figure; hereinafter, the bead, layer, and pass in the figure are denoted by "bead-layer-pass") is formed on the steel plate 4 along the long side on one side of the rectangular contact surface 6a of the bracket 6 (that is, the left side of the bracket 6 in Fig. 4). In addition, the number of passes of the first layer of the third weld bead 3 is 1 pass. The first layer (3-1-1) of the third weld bead 3 is formed on the steel plate 4 along the long side on the other side of the rectangular contact surface 6a of the bracket 6 (that is, the right side of the bracket 6 in Fig. 4).

Next, the number of passes of the second layer of each of the second weld bead 2 and the third weld bead 3 is 2 passes. In the second layer of the second weld bead 2, the first pass (2-2-1) is formed on the steel plate 4 along the above-described first layer (2-1-1), and the second pass (2-2-2) is formed between the bracket 6 and the second-layer first pass (2-2-1). In addition, in the second layer of the third weld bead 3, the first pass (3-2-1) is formed on the steel plate 4 along the above-described first layer (3-1-1), and the second pass (3-2-2) is formed between the bracket 6 and the second-layer first pass (3-2-1).

Moreover, the number of passes of the third layer of each of the second weld bead 2 and the third weld bead 3 is 3 passes. In the third layer of the second weld bead 2, the first pass (2-3-1) is formed on the steel plate 4 along the second-layer first pass (2-2-1), and the subsequent second pass (2-3-2) is formed along the preceding third-layer first pass (2-3-1). The final third pass (2-3-3) is formed between the bracket 6 and the third-layer second pass (2-3-2). In addition, in the third layer of the third weld bead 3, the first pass (3-3-1) is formed on the steel plate 4 along the second-layer first pass (3-2-1), and the subsequent second pass (3-3-2) is formed along the preceding third-layer first pass (3-3-1). The final third pass (3-3-3) is formed between the bracket 6 and the third-layer second pass (3-3-2).

### [Adjustment of Length of Elongated Portion]

Here, as the shape of the multi-layer weld bead, the length of the elongated portion in each layer (hereinafter also referred to as "elongated portion length") is preferably adjusted as follows.

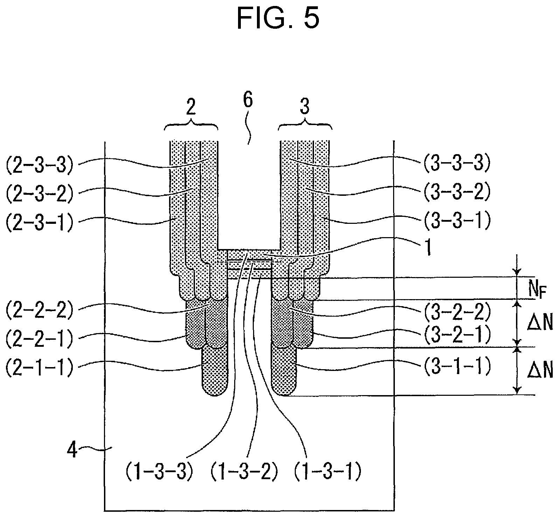

In a preferred shape of the elongated portion for improving the fatigue strength of the multi-layer welded joint, first, the elongated portion length (N_{F}) of the final layer in each of the elongated portion 2a of the second weld bead 2 and the elongated portion 3a of the third weld bead 3 is set within the range of 5 mm to 50 mm (refer to Figs. 2 and 5). If the elongated portion length N_{F} of the final layer is less than 5 mm, an effect of improving fatigue strength cannot be obtained. In addition, if N_{F} exceeds 50 mm, the welding operation cost increases, which is not preferable. More preferably, N_{F} is 10 mm to 40 mm. Still more preferably, N_{F} is 20 mm to 30 mm.

Note that the elongated portion length of the final layer of the second weld bead 2 and the elongated portion length of the final layer of the third weld bead 3 may be changed for each weld bead but preferably have the same length in order to prevent complication of the welding operation.

Next, when the elongated portion length of each layer in the elongated portions of the second weld bead 2 and the third weld bead 3 is denoted by Nᵢ (note that each layer is denoted by the i-th layer) and the elongated portion length of the preceding layer of each of the layers is denoted by Nᵢ₋₁ (note that the preceding layer is denoted by the (i-1)-th layer), the difference ΔN represented by ΔN = Nᵢ₋₁ - Nᵢ is preferably in the range of 5 mm to 50 mm. Here, i is a natural number from 2 to 10.

If i exceeds 10, the operation becomes complicated and leads to increased cost, which is not preferable. If the difference ΔN is less than 5 mm, it becomes difficult to disperse the stress flowing into the bracket 6 to the elongated weld beads, and, as a result, sufficient improvement in fatigue properties cannot be achieved, which is not preferable. In addition, if the difference ΔN exceeds 50 mm, the welding operation cost increases, which is not preferable. More preferably, the difference ΔN is 10 mm to 40 mm. Still more preferably, the difference ΔN is 20 mm to 30 mm. Note that the difference ΔN between the layers may be varied for each layer; however, in order to prevent complication of the welding operation, it is preferable that the same difference be used for the layers. Moreover, the difference ΔN between the layers of the second weld bead 2 and the difference ΔN between the layers of the third weld bead 3 may be changed for each weld bead; however, in order to prevent complication of the welding operation, it is preferable that both be the same length.

Note that, since the present invention is a technique related to multi-layer welding, i is 2 or more.

Here, the elongated portion length Nᵢ of each layer refers to a distance, in an elongation direction of the second weld bead 2 and the third weld bead 3, from a width-direction end portion of the first weld bead 1 formed at the short side of the rectangular contact surface 6a of the bracket 6 to a tip of the elongated portion of the corresponding layer. The elongated portion length N_{F} of the final layer and the difference ΔN between the layers can be obtained by measuring, using a caliper, the shape (length) of the elongated portion of each layer after formation of the weld beads, as illustrated in the example of weld bead formation with 3 layers and 6 passes in Fig. 5.

Further, a specific example of the above-described three-layer welding, that is, the case where i = 3, will be described. When the elongated portion length N₃ = N_{F} of the third layer, which is the final layer, is set to 20 mm, and the difference ΔN between the layers is set to 10 mm, the elongated portion length N₂ of the second layer may be set to 30 mm, and the elongated portion length N₁ of the first layer may be set to 40 mm. Thus, once the target elongated portion length N_{F} of the final layer and the difference ΔN in elongated portion length between the layers are set, the elongated portion lengths from the first layer are automatically determined. As described above, the fatigue strength can be improved by forming the elongated portion in multiple layers.

### [Peripheral Welding Method]

Next, the multi-layer welding method, according to the present invention, for a steel structure including a bracket will be described based on Fig. 6 illustrating an embodiment of the procedure of the multi-layer welding method. The welding is performed in order from (a) in Fig. 6.

In this example, first, the vertical plate (not illustrated) is disposed on an upper surface of the steel plate 4, and the vertical plate is sandwiched from both sides by two brackets. The brackets are disposed so as to be in contact with the steel plate 4 and the vertical plate. Note that, in Fig. 6, only one side of the steel plate is illustrated such that one bracket is illustrated, and the rectangular contact surface 6a of the bracket is illustrated for description.

Next, the disposed members are subjected to gas-shielded arc welding. Note that, by performing the welding in the order of (a) to (i) below, the multi-layer weld beads in the welded joint of the present invention having the above-described characteristics and the like can be obtained.
(a) The first layer of the first weld bead 1 is formed in 1 pass (1-1-1) along the short side on one side (in this example, the side away from the vertical plate) of the rectangular contact surface 6a at which the bracket is in contact with the steel plate 4 (refer to (a) in Fig. 6).
(b) The first pass (1-2-1) and the second pass (1-2-2) of the second layer of the first weld bead 1 are formed so as to overlap the first layer (refer to (b) in Fig. 6).
(c) Further, the first pass (1-3-1), the second pass (1-3-2), and the third pass (1-3-3) of the third layer of the first weld bead 1 are formed so as to overlap the second layer (refer to (c) in Fig. 6).
(d) Next, the first layer of the second weld bead 2 is formed in 1 pass (2-1-1) along one long side of the rectangular contact surface 6a of the bracket so as to overlap one end portion of the first weld bead 1. The elongated portion length N₁ of the first-layer first pass (2-1-1) is set to a length obtained by adding two differences ΔN to the set elongated portion length N_{F} of the final layer (in this example, the third layer), as described above with reference to Fig. 5 (refer to (d) in Fig. 6).
(e) The first pass (2-2-1) and the second pass (2-2-2) of the second layer of the second weld bead 2 are formed so as to overlap the first layer of the second weld bead 2. The elongated portion length N₂ of the second layer is set to a length obtained by adding the difference ΔN to the elongated portion length N_{F} of the final layer (refer to (e) in Fig. 6).
(f) Further, the first pass (2-3-1), the second pass (2-3-2), and the third pass (2-3-3) of the third layer of the second weld bead 2, which is the final layer, are formed so as to overlap the second layer. Here, the elongated portion length N₃ is the initially set N_{F} (refer to (f) in Fig. 6).
(g) to (i) Finally, along the other long side of the rectangular contact surface 6a of the bracket, the first-layer first pass (3-1-1) to the third-layer third pass (3-3-3) of the third weld bead 3 are formed (refer to (g) to (i) in Fig. 6). The formation method in each layer and each pass is the same as the above-described formation method in (d) to (f).

As described above, the multi-layer weld beads elongated on the steel plate 4 along the long sides on both sides of the rectangular contact surface 6a of the bracket can be formed.

Note that, although Fig. 6 mainly illustrates the region around the bracket on one side of the welded joint, multi-layer weld beads are preferably formed around the bracket on the other side (the opposite side) in a similar manner.

In addition, the joint between the steel plate and the vertical plate may be a multi-layer weld. After two spots of the steel plate-vertical plate area are multi-layer welded, the bracket is multi-layer welded according to the above-described procedure.

### [Welding Conditions]

From the point of view of welding efficiency, the welding is preferably performed by gas-shielded arc welding. Hereinafter, an example of welding conditions for gas-shielded arc welding will be described.
**·**Welding current: 200 A to 400 A, welding voltage: 20 V to 50 V, welding speed: 20 cm/min to 40 cm/min
**·**Shielding gas: a gas containing 100 vol% CO₂, or a mixed gas of CO₂ and Ar (as an example of the mixture ratio of the mixed gas, a mixed gas containing 20 vol% CO₂ and 80 vol% Ar may be provided)
**·**Welding wire diameter: 1.2 mm to 2.4 mm

### [Welded Joint in Floating Offshore Wind Power Generation Facility]

The multi-layer welding method according to the present invention is also applicable to a welded joint of a floating offshore wind power generation facility. Here, the outline of a floating offshore wind power generation facility will be described. Wind power generation is one of the renewable energies. Offshore wind power generation facilities installed on the sea include bottom-fixed facilities and floating facilities, and such floating offshore wind power generation facilities are used in sea areas with a water depth of 50 m or more. In a floating offshore wind power generation facility, a structure having a wind turbine mounted thereon is connected by chains or the like so as to be floated on the sea. The structure includes a tower portion that holds and supports a wind turbine (wind power generator) and a floating portion having the tower portion mounted thereon and floating on the sea. The tower portion and the floating portion serving as a base are joined by welding, and improving the fatigue life of the welded joint portion is an important issue.

Thus, when the present invention is applied to such a floating offshore wind power generation facility, the multi-layer welding method of the present invention is performed with the above-described steel plate 4 serving as a floating member of the floating offshore wind power generation facility and the vertical plate 5 serving as a tower member of the floating offshore wind power generation facility. That is, by elongating multi-layer weld beads on the floating member and further appropriately adjusting the elongated portion length of each layer as described above, a multi-layer welded joint having improved fatigue strength can be obtained.

### EXAMPLES

Hereinafter, the present invention will be further described based on examples. However, the examples described below are merely provided to illustrate and describe the present invention in more detail and are not intended to limit the scope of rights of the present invention.

First, a YP460 material having a plate width of 100 mm was used as a sample. The sample was multi-layer welded by gas-shielded arc welding using a gas containing 100 vol% CO₂ at a welding current of 230 A, a welding voltage of 30 V, and a welding speed of 34 cm/min to produce a welded joint. The produced welded joints include multi-layer welded joints in Figs. 7 and 8 including no elongated portions in weld beads, and welded joints in Figs. 1 and 2, according to the present invention, including multi-layer weld beads with elongated portions.

Note that, for Joint Nos. 1 and 2, each value in the column of "number of layers and number of passes of welding" in Table 1 represents a welding condition for the weld bead formed on the periphery of the rectangular contact surface 6a of the bracket 6 illustrated in Figs. 7 and 8. In addition, for Joint Nos. 3 to 19, the values represent the welding conditions for all of the first to third weld beads 1 to 3 illustrated in Figs. 1 and 2.

A fatigue test on each of the welded joints was carried out by fixing the welded joint with a chucking portion, which is a fixing member of a fatigue testing machine, and applying fatigue loads (specifically, tension and compression) to the welded joint. The applied stress range was set to 100 MPa in all cases. The number of cycles to fracture (cycles) at that time was counted as fatigue life.

The fatigue test results of the welded joints are shown in Table 1.

**[Table 1]**

| Joint No. | Plate thickness of steel plate t₄ [mm] | Plate thickness of vertical plate t₅ [mm] | Plate thickness of bracket t₆ [mm] | Number of layers, number of passes of welding | Elongated portion length of final layer N_{F} [mm] | Difference in elongated portion length between layers ΔN [mm] | Applied stress range [MPa] | Number of cycles to fracture [cycles] | Remarks |
|---|---|---|---|---|---|---|---|---|---|
| 1 | 25 | 25 | 25 | 3 layers 6 passes | (No elongated portion) | (No elongated portion) | 100 | 1.0×10⁶ | Comparative example |
| 2 | 50 | 50 | 50 | 6 layers 21 passes | (No elongated portion) | (No elongated portion) | 100 | 8.0×10⁵ | Comparative example |
| 3 | 25 | 25 | 25 | 3 layers 6 passes | 4 | 5 | 100 | 1.3×10⁶ | Inventive example |
| 4 | 50 | 50 | 50 | 6 layers 21 passes | 4 | 5 | 100 | 1.1×10⁶ | Inventive example |
| 5 | 25 | 25 | 25 | 3 layers 6 passes | 5 | 4 | 100 | 1.3×10⁶ | Inventive example |
| 6 | 50 | 50 | 50 | 6 layers 21 passes | 5 | 4 | 100 | 1.1×10⁶ | Inventive example |
| 7 | 25 | 25 | 25 | 3 layers 6 passes | 5 | 5 | 100 | 1.8×10⁶ | Inventive example |
| 8 | 25 | 25 | 25 | 3 layers 6 passes | 5 | 50 | 100 | 1.9×10⁶ | Inventive example |
| 9 | 25 | 25 | 25 | 3 layers 6 passes | 50 | 5 | 100 | 1.9×10⁶ | Inventive example |
| 10 | 25 | 25 | 25 | 3 layers 6 passes | 20 | 10 | 100 | 2.0×10⁶ (No fracture) | Inventive example |
| 11 | 25 | 25 | 25 | 3 layers 6 passes | 50 | 50 | 100 | 2.0×10⁶ (No fracture) | Inventive example |
| 12 | 50 | 50 | 50 | 6 layers 21 passes | 5 | 5 | 100 | 1.6×10⁶ | Inventive example |
| 13 | 50 | 50 | 50 | 6 layers 21 passes | 5 | 50 | 100 | 1.7×10⁶ | Inventive example |
| 14 | 50 | 50 | 50 | 6 layers 21 passes | 50 | 5 | 100 | 1.7×10⁶ | Inventive example |
| 15 | 50 | 50 | 50 | 6 layers 21 passes | 20 | 10 | 100 | 1.8×10⁶ | Inventive example |
| 16 | 50 | 50 | 50 | 6 layers 21 passes | 50 | 50 | 100 | 1.8×10⁶ | Inventive example |
| 17 | 25 | 25 | 25 | 3 layers 6 passes | 10 | 5 | 100 | 1.8×10⁶ | Inventive example |
| 18 | 25 | 25 | 25 | 3 layers 6 passes | 40 | 5 | 100 | 1.8×10⁶ | Inventive example |
| 19 | 25 | 25 | 25 | 3 layers 6 passes | 5 | 40 | 100 | 1.9×10⁶ | Inventive example |

Joint Nos. 1 and 2 represent the test results of the case where simple multi-layer welding without elongated portions was performed as a comparative example.

Joint Nos. 3 and 4 represent test results for inventive examples in which multi-layer welding with elongated weld beads was performed; however, the elongated portion length N_{F} of the final layer was 4 mm and the difference ΔN in elongated portion length between the layers was 5 mm.

Joint Nos. 5 and 6 also represent test results for inventive examples in which multi-layer peripheral welding with elongated weld beads was performed; however, the elongated portion length N_{F} of the final layer was 5 mm, and the difference ΔN in elongated portion length between the layers was 4 mm.

Joint Nos. 7 to 19 also represent test results for inventive examples in which multi-layer peripheral welding with the elongated weld beads was performed, in which the elongated portion length N_{F} of the final layer was within the preferred range of 5 mm to 50 mm and the difference ΔN in elongated portion length between the layers was also within the preferred range of 5 mm to 50 mm.

The number of cycles to fracture was as follows. In the case of the welded joints (that is, Joint Nos. 7 to 19) in which the elongated portion length N_{F} of the final layer and the difference ΔN in elongated portion length between the layers were within the preferred range of 5 mm to 50 mm, the value of the number of cycles to fracture was larger than that in the case of the welded joints (that is, Joint Nos. 1 and 2) formed by multi-layer welding without elongated portions. On the other hand, in the case of the welded joints (that is, Joint Nos. 3 to 6) in which the elongated portion length N_{F} of the final layer or the difference ΔN in elongated portion length between the layers was less than 5 mm, the value of the number of cycles to fracture was larger than that in the case of the welded joints (that is, Joint Nos. 1 and 2) formed by multi-layer welding without elongated portions. However, the value of the number of cycles to fracture was not as large as that in the case of the above-described preferred range of 5 mm or more.

From the above results, the effect of improving the fatigue strength of the welded joint by controlling the elongated portion length N_{F} of the final layer and the difference ΔN in elongated portion length between the layers was confirmed.

### Reference Signs List

1 first weld bead
2 second weld bead
2a elongated portion of second weld bead
3 third weld bead
3a elongated portion of third weld bead
4 steel plate
5 vertical plate
6 bracket
6a rectangular contact surface of bracket in contact with steel plate (that is, bracket rectangular contact surface)
7 multi-layer weld bead formed by peripheral welding
N_{F} elongated portion length of final layer in elongated portion of each of second weld bead and third weld bead (unit: mm)
Nᵢ elongated portion length of each layer (the i-th layer) in elongated portion of each of second weld bead and third weld bead (unit: mm)
ΔN difference in elongated portion length between layer (the i-th layer) and preceding layer (the (i-1)-th layer) (that is, Nᵢ₋₁ - Nᵢ)
t₄ plate thickness of steel plate (mm)
t₅ plate thickness of vertical plate (mm)
t₆ plate thickness of bracket (that is, length of short side of bracket rectangular contact surface) (unit: mm)

## Claims

1. A multi-layer welding method
in which a vertical plate is provided on a steel plate, and a bracket for reinforcing the vertical plate is welded to the steel plate and the vertical plate, the multi-layer welding method comprising:
forming a first weld bead in multiple layers along a short side of a rectangular contact surface at which the bracket is in contact with the steel plate; and
subsequently forming a second weld bead and a third weld bead in multiple layers such that the second weld bead and the third weld bead are provided along long sides of the rectangular contact surface, overlap end portions of the first weld bead, and extend onto the steel plate.

2. The multi-layer welding method according to claim 1, wherein
an elongated portion length (N_{F}) of a final layer in an elongated portion of each of the second weld bead and the third weld bead is set in a range of 5 mm to 50 mm.

3. The multi-layer welding method according to claim 1 or 2, wherein,
when each layer in an elongated portion of each of the second weld bead and the third weld bead is denoted by an i-th layer and an elongated portion length of each of the layers is denoted by Nᵢ, and when a preceding layer of each of the layers is denoted by an (i-1)-th layer and an elongated portion length of the preceding layer of each of the layers is denoted by Nᵢ₋₁,
a difference ΔN represented by ΔN = Nᵢ₋₁ - Nᵢ is in a range of 5 mm to 50 mm, and i is a natural number from 2 to 10.

4. The multi-layer welding method according to any one of claims 1 to 3, wherein
the steel plate is a floating member of a floating offshore wind power generation facility, and the vertical plate is a tower member of the floating offshore wind power generation facility.

5. A multi-layer welded joint
in which brackets disposed so as to sandwich a vertical plate provided on a steel plate are welded to the steel plate and the vertical plate, the welded joint comprising:
a first weld bead formed in multiple layers along a short side of a rectangular contact surface at which a corresponding one of the brackets is in contact with the steel plate; and
a second weld bead and a third weld bead formed in multiple layers so as to be provided along long sides of the rectangular contact surface, overlap end portions of the first weld bead, and extend onto the steel plate.

6. The multi-layer welded joint according to claim 5, wherein
an elongated portion length (N_{F}) of a final layer in an elongated portion of each of the second weld bead and the third weld bead is set in a range of 5 mm to 50 mm.

7. The multi-layer welded joint according to claim 5 or 6, wherein,
when each layer in an elongated portion of each of the second weld bead and the third weld bead is denoted by an i-th layer and an elongated portion length of each of the layers is denoted by Nᵢ, and when a preceding layer of each of the layers is denoted by an (i-1)-th layer and an elongated portion length of the preceding layer of each of the layers is denoted by Nᵢ₋₁,
a difference ΔN represented by ΔN = Nᵢ₋₁ - Nᵢ is in a range of 5 mm to 50 mm, and i is a natural number from 2 to 10.

8. The multi-layer welded joint according to any one of claims 5 to 7, wherein
the steel plate is a floating member of a floating offshore wind power generation facility, and the vertical plate is a tower member of the floating offshore wind power generation facility.
